# EUROPEAN PATENT APPLICATION

(11) **EP 4 752 072 A1**
(43) Date of publication of application: **03.06.2026**
(21) Application number: 24462003.5
(22) Date of filing: 29.11.2024
(51) Int. Cl.: B64U 20/87, B64U 101/30

(54) **AUTONOMOUS UNMANNED AERIAL VEHICLE**

(71) Applicant: TECHTRA Közhasznú Noprofit Zrt., 1113 Budapest (HU); Budapesti Müszaki és Gazdaságtudományi Egyetem, 1111 Budapest (HU)
(72) Inventor: Kovács, Gábor, H-1135 Budapest (HU); Tihanyi, Viktor, H-1032 Budapest (HU)

(57) **Abstract**

The present description relates to an autonomous unmanned aerial vehicle (UAV) having at least one stereo optical imaging device and at least one stereo thermal imaging device making the unmanned aerial vehicle capable of operating in a wide range of weather and lighting condition with high confidence. The perception system for the autonomous UAV can sense the environment under a wide range of lighting conditions and offers adaptive coverage for collision avoidance and localization.

## Description

The present description relates to an autonomous unmanned aerial vehicle (UAV) having at least one stereo optical imaging device and at least one stereo thermal imaging device making the unmanned aerial vehicle capable of operating in a wide range of weather and lighting conditions with high confidence.

State of the art application EP3903164A1 describes a collision avoidance method may include: receiving depth information of one or more depth imaging sensors of an unmanned aerial vehicle; determining from the depth information a first obstacle located within a first distance range and movement information associated with the first obstacle; determining from the depth information a second obstacle located within a second distance range and movement information associated with the second obstacle, the second distance range is distinct from the first distance range, determining a virtual force vector based on the determined movement information, and controlling flight of the unmanned aerial vehicle based on the virtual force vector to avoid a collision of the unmanned aerial vehicle with the first obstacle and the second obstacle.

Another application US10979651 B1 provides an imaging system including a first optical module including a first image sensor, a second optical module comprising a second image sensor, and an image processor. The first optical module has a first focal length range. The second optical module has a second focal length range. The first focal length range and the second focal length range are different. The image processor is configured to receive image data for a first image from the first optical module and/or image data for a second image from the second optical module and generate data to show the first image and/or the second image within a display.

The state-of-the-art patent documents do not provide an unmanned aerial vehicle capable of operating in a wide range of weather and lighting conditions with high confidence. The aim of the present invention is to provide, starting from the state-of-the-art, an unmanned aerial vehicle capable of operating in a wide range of visibility conditions with high confidence.
- Figure 1.: The unmanned aerial vehicle with a frontside unit, front view
- Figure 2.: The unmanned aerial vehicle with a frontside unit, bottom view
- Figure 3.: The frontside unit's block diagram
- Figure 4A.: Embodiment of the optical stereo image capture device
- Figure 4B.: Another embodiment of the optical stereo image capture device
- Figure 5A.: Embodiment of the thermal stereo image capture device
- Figure 5B.: Another embodiment of the thermal stereo image capture device
- Figure 6A.: Embodiment of the combined imaging device
- Figure 6B.: Another embodiment of the combined imaging device

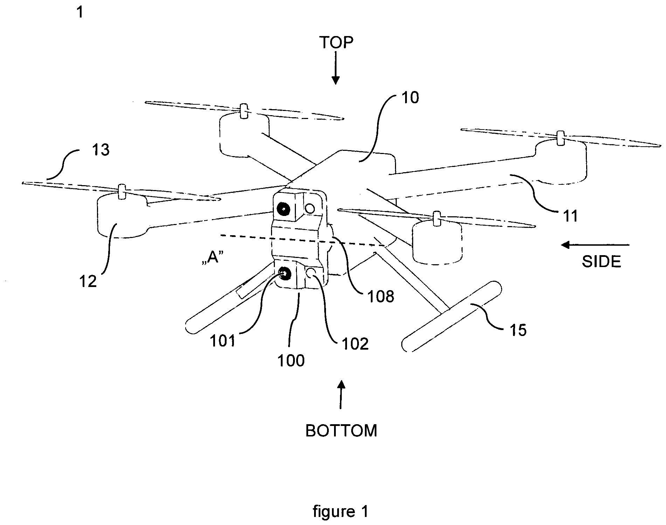

Referring to figure 1, the UAV (1) may include at least one arm (11) extending from the main body (10) of the UAV (1). The main body (10) has a top side, a bottom side, and more lateral sides (e.g. front, rear, left, right sides). The arms (11) have a first end attached to the main body (10) and a second end supporting a flight actuator (12) associated with a propeller (13). Although some embodiments include four arms (11) extending from the main body (10), in other embodiments the UAV (1) may include any suitable number of arms (11). Further embodiments may include a UAV (1) having one, two, three or more than four arms. Other embodiments may include a UAV (1) having no arms, for example configured as a wing or helicopter-style UAV, or other configurations having one or more propellers (13) directly configured at its main body (10). The main body (10) and the arms (11) of the UAV (1) may be made of any suitable materials, including, but not be limited to plastics, metals, wood, ceramics, composite material or any combinations thereof. In particular embodiments, at least a portion of structure of one or more of the arms (11) may be composed of a suitable circuit board material having one or more electrically conductive traces or other electrical circuit components may be formed. In further embodiments, at least a portion of the main body (10) is composed of a suitable circuit board material. In various embodiments, the traces may be used for transmitting power and/or control signals from a power source and/or controller to flight actuator (12). Suitable circuit board material includes, but not be limited to glass reinforced epoxy laminates, FR-4, plastics, PTFE, copper, aluminum and iron. In some embodiments, the UAV (1) may include propellers (13) and associated flight actuators (12) secured to each arm (11), at or near the second end of each arm (11), to provide flight, aerial propulsion to the UAV (1). In some embodiments, the propellers (13) may be located on top of the arms (11), at or near the second ends of the arms (11). In other embodiments, the propellers (13) may be provided at other suitable locations, such as, but not limited to, below the arms (11), at end surfaces of the arms (11), or within the arms (11). In addition, the UAV (1) may have a suitable number of legs, including a leg (15) at the bottom of each arm (11) or at other suitable locations. The legs (15) may support the UAV (1) in an upright or standing orientation as the UAV (1) is on the ground. Each propeller (13) may be coupled to a respective flight actuator (13) configured to drive the propellers (13). For example, flight actuator (12) may be a motor, which may include, but not be limited to alternating current electric motors, direct current electric motors, brushless motors, brushed motors, three phase motors, or any other suitable motor for use in UAV (1). Further referring to figure 1, the frontside unit (100) is adjustably connected to the UAV's (1) front side through an axis "A" having at least one-degree of freedom. The axis "A", thus the frontside unit's (100) position is adjusted by the frontside unit position actuator (108), e.g. a motor. The frontside unit (100) contains camera modules, such as the frontside unit optical stereo image capture device (101) and frontside unit thermal stereo image capture device (102), discussed in the following detailed.

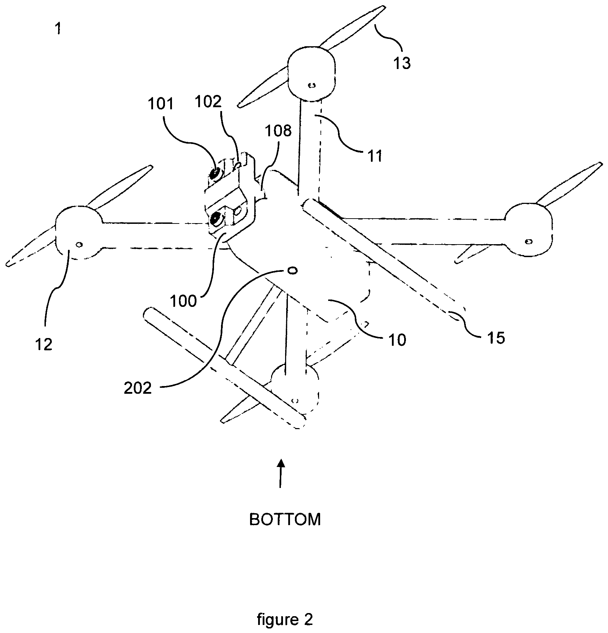

In a further embodiment shown in figure 2, the UAV (1) may include at least one arm (11) extending from the main body (10) of the UAV (1). The UAV (1) may include a main body (10) and one or more arms (11) extending from the main body (10). The arms (11) have a first end attached to the main body (10) and a second end supporting a flight actuator (12) associated with the propeller (13). The UAV (1) may include propellers (13) and associated flight actuators (12) secured to each arm (11), at or near the second end of each arm (11) to provide aerial propulsion and maneuvering to the UAV (1). In some embodiments, the propellers (13) may be located on top of the arms (11), at or near the second ends of the arms (11). In other embodiments, the propellers (13) may be provided at other suitable locations, such as, but not limited to, below the arms (11), at end surfaces of the arms (11), or within the arms (11). The UAV (1) may have a plurality of legs, including a leg (15) at the bottom of each arm (11) or at other suitable locations. The legs (15) may support UAV (1) in an upright or standing orientation as the UAV (1) is on the ground. Each propeller (13) may be coupled to a respective flight actuator (13) configured to drive the propellers (13). The frontside unit (100) is adjustably connected to the UAV's (1) frontside through an axis "A" having at least one-degree of freedom. The axis "A", thus the frontside unit's (100) position is adjusted by the frontside unit position actuator (108) in accordance to the flight trajectory. The exemplary embodiment shown in figure 2 contains a thermal image capture device (202) facing in a downward direction. UAV (1) may contain at least two image capture devices (or imaging sensors) functioning on different working principles. For example, the UAV (1) may contain a thermal camera operating in the infrared range, and an optical camera operating in the visible range.

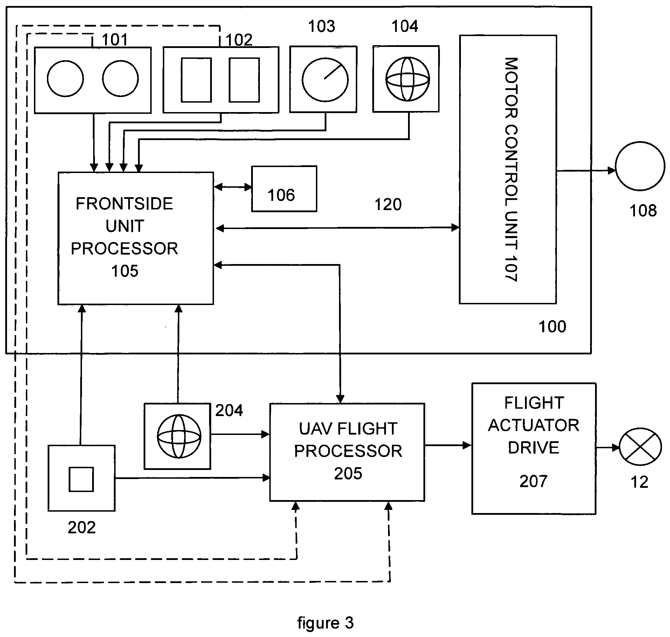

Figure 3 shows details of the frontside unit (100). In one embodiment, the frontside unit (100) contains at least one frontside unit optical stereo image capture device (101), at least one frontside unit thermal stereo image capture device (102), at least one radar unit (103), at least one frontside unit inertial sensor device (104), at least one frontside unit processor (105) and at least one memory unit (106). The at least one frontside unit optical stereo image capture device (101), the at least one frontside unit thermal stereo image capture device (102), the at least one radar unit (103), the at least one frontside unit inertial sensor device (104) and the memory unit (106) are connected to the at least one frontside unit processor (105). Alternatively, the frontside unit optical stereo image capture device (101) and frontside unit thermal stereo image capture device (102) may be connected to the UAV flight processor (205) for image processing. It is also conceivable that the frontside unit optical stereo image capture device (101) and the frontside unit thermal stereo image capture device (102) is connected to both the frontside unit processor (105) and the UAV flight processor (205) for redundancy reasons. The memory unit (106) may be a separate unit. In a further embodiment, the memory unit (106) may be an integrated part of the frontside processor unit (105) itself. The frontside unit (100) also contains at least one motor control unit (107) communicatively connected to the frontside unit processor (105) via a communication line (120). The communication line (120) may be redundant or non-redundant, simplex, half duplex or full duplex. The motor control unit (107) is responsible for driving the frontside unit position actuator (108). The frontside unit (100) is adjustably connected to the UAV's (1) frontside through an axis "A" having at least one-degree of freedom. The axis "A", thus the frontside unit's (100) position is adjusted by the frontside unit position actuator (108) driven by the motor control unit (107). Additionally, to the sensors and devices describe above, the system may contain an additional thermal image capture device (202), fixed to the bottom side of the UAV (1), an additional inertial sensor device (204) and an UAV flight processor (205).

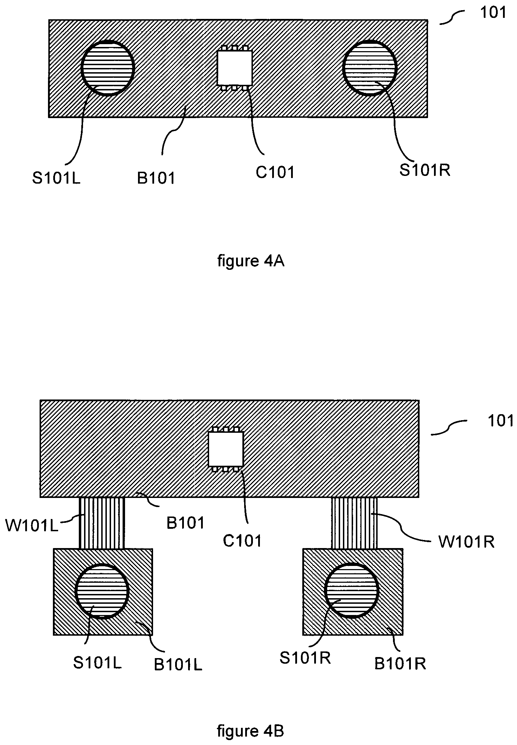

Figures 4A and 4B show the optical stereo image capture device (101) of the frontside unit (100). An optical stereo camera is a type of camera with two or more lenses with a separate image sensor for each lens, which allows the camera to simulate human binocular vision in the visible light range and gives it the ability to capture three-dimensional images. The distance between the lenses in a typical stereo camera is about the distance between the human eyes, though a longer base line gives more 3-dimensionality. By capturing two images from different angles, a stereo 3D camera calculates the distance to objects in the view. The process involves measuring the disparity between the two images and using it to triangulate the depth or distance. Various algorithms may be used to analyze the images captured by the sensors. The algorithms match the corresponding points in both images to calculate depth information, generating a 3D representation of the scene.

In an embodiment shown in figure 4A, the frontside unit optical stereo image capture device (101) is fully integrated on a single printed circuit board B101. A left optical imaging sensor (S101L) and a right optical imaging sensor (S101R) is mounted on the printed circuit board B101, which is provided with an optical image processor (C101), which processes the image data of the single optical left and right imaging sensors (S101L, S101R).

According to figure 4B, the frontside unit optical stereo image capture device (101) contains a pair of optical imaging sensors (S101L, S101R) and an image processor (C101) for pre-processing raw image data as described above. Each single optical imaging sensor (S101L, S101R) of the camera pair having its own single printed circuit board (B101L B101R), which is electrically connected to the printed circuit board (B101) via an electrical connection section (W101L and W101R). Instead of ribbon wires, flexible cables, flat cables or a flexible printed circuit board may be used. The type of imaging sensor includes but is not limited to charge-coupled device (CCD), electron-multiplying charge-coupled device (EMCCD), complementary metal-oxide-semiconductor (CMOS) or back-illuminated CMOS. The frontside unit optical stereo image capture device (101) may contain an RGB camera pair, or a monochromatic camera pair.

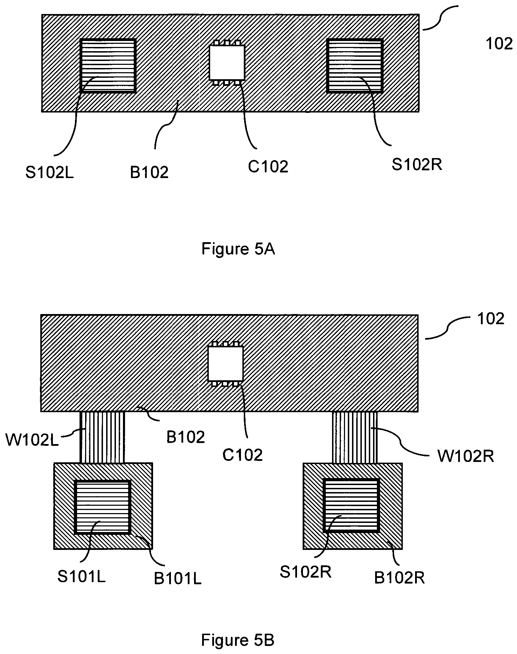

Figures 5A and 5B are related in detail to the thermal stereo image capture device (102) of the frontside unit (100). Infrared or thermal imaging is about to capture a thermal image or an image sequence of an object emitting radiation in the infrared range. Infrared radiation is emitted by all objects of a temperature above absolute zero. A thermos camera (or IR camera) makes it possible to see the environment with or without visible illumination. The intensity of the infrared radiation of the object increases with the object temperature. In a thermal image provided by a thermal camera, a warm object stands out against a cool object. A thermos camera, also called IR camera, infrared camera or thermal camera is a device that creates an image using infrared radiation, like a normal camera that forms an image using visible light. Instead of the 400-700 nm range of visible light cameras, infrared cameras are sensitive to the wavelengths from about 1000 nm to about 14000nm. The frontside unit thermal stereo image capture device (102) is an infrared stereo camera containing two imaging devices separated by a given distance, e.g. a few centimeters (<10 cm). The usage of two thermal imaging devices (or sensors) allows to obtain 3D or depth information about an object radiating in the IR wavelength range. The two imaging devices of the frontside unit thermal stereo image capture device (102) is at least partly or fully mounted on a printed circuit board. It is also conceivable that each single camera of the camera pair has its own single PCB, which is electrically and mechanically attached to the PCB via e.g. ribbon wires. Instead of ribbon wires, a flexible cable (e.g. a flat cable) or flexible printed circuit board may be used.

In one embodiment, as shown in figure 5A, the frontside unit thermal stereo image capture device (102) is fully integrated on a single printed circuit board (B102). A left thermal imaging sensor (S102L) and a right thermal imaging sensor (S102R) are mounted on the printed circuit board (B102), which is provided with a thermal image processor (C102), which processes the image data of the thermal imaging sensor (S102L) and (S102R). In another embodiment, as shown in figure 5B the frontside unit thermal stereo image capture device (102) is provided with a left thermal imaging sensor (S102L) and a right thermal imaging sensor (S102R) mounted on separate left and right printed circuit boards (B102L and B102R), respectively. The left printed circuit board (B102L) with the left thermal imaging sensor (S102L) thereon connected by an electrical connection section (W102L) to the printed circuit board (B102). The right printed circuit board (B102R) with the right thermal imaging sensor (S102R) thereon connected by an electrical connection section (W102R) to the printed circuit board B102. The electrical connection section may be for example a cable, a flat cable, a ribbon cable, flexible ribbon, a semiflexible PCB portion or a flexible PCB portion.

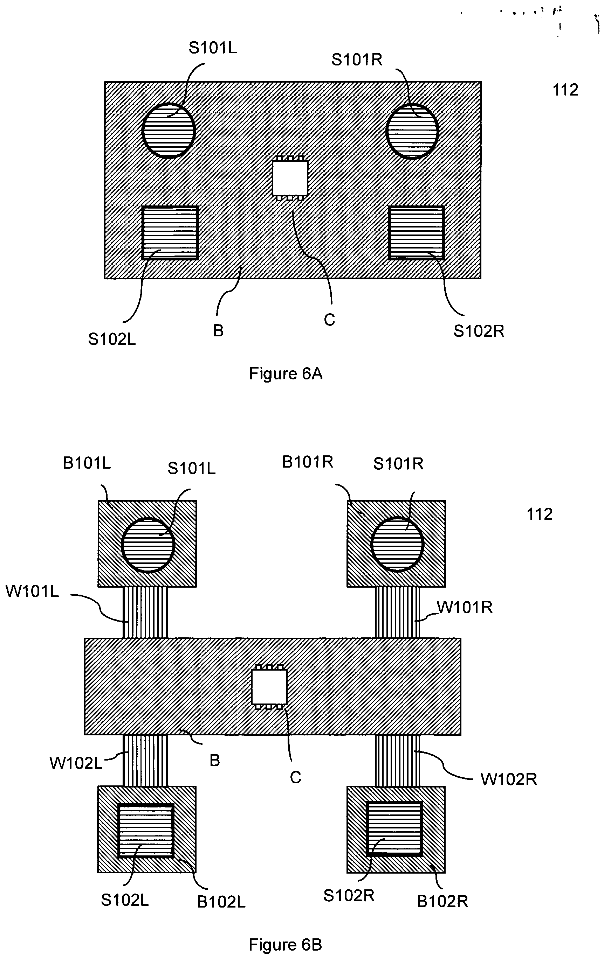

In an embodiment of figure 6A all imaging sensors S101L, S101R, S102L and S102R are mounted on the same printed board B containing the image processor C. In a further embodiment of figure 6B, the frontside unit optical stereo image capture device (101) and the frontside unit thermal stereo image capture device (102) is combined. Left optical camera (S101L) is mounted on a single left printed circuit board (B101L). Right optical imaging sensor (S101R) is mounted on a single right printed circuit board (B101R). Left thermal imaging sensor (S102L) is mounted on a single left printed circuit board (B102L). Right thermal imaging sensor (S102R) is mounted on a single right printed circuit board (B102R). The single printed circuit boards (B101L, B101R, B102L and B102R) are connected to the main board B via electrical connection section W101L, W101R, W102L and W102, respectively. The main board contains an image processor C for processing the image data of S101L, S101R, S102L and S102R.

The frontside unit (100) contains at least a frontside unit inertial sensor device (104) including at least an accelerometer and a gyroscope to measure and report the velocity, acceleration and orientation of the UAV (1). Similarly to the radar device (103), the frontside unit optical stereo image capture device (101) and frontside unit thermal stereo image capture device (102), the frontside unit inertial sensor device (104) is connected to the frontside unit processor (105). The memory unit (106) can include any type of memory that can store code and data for execution by the at least one frontside unit processor (105). Memory unit (106) can store programs and code that implement various processes and functionalities such as obstacle detection and/or avoidance or frontside unit position adjusting. The type of memory includes but not limited to dynamic random access memory (DRAM), static random access memory (SRAM), flash memory, read only memory (ROM). Memory unit (106) can include any type of non-volatile storage device. Furthermore, the UAV (1) has a downward looking thermal camera (202), an additional inertial sensor unit (204), a global positioning device (220), an additional image processing unit (205) and one flight processor (205). The downward looking thermal camera (202) arranged on the bottom of the UAV (1) main body (10). The additional inertial sensor unit (204), the global positioning device (220), the additional image processing unit (205) and the one flight processor (205) are arranged on the UAV (1) main body (10). The inertial sensor unit (204) may be arranged in the UAV's (1) body center (center of gravity). Flight processor (205) is dedicated to drive the flight actuator drive (205) to actuate the UAV flight actuator (12), which are provided with propellers (13). The UAV (1) is flying autonomously in dedicated yaw direction. The UAV (1) movement vector is calculated continuously by the frontside unit processor (105) and the motor control unit (107) is controlled in a way that the frontside unit (100) is always facing in the direction of the UAV (1) trajectory. The frontside unit optical stereo image capture device (101) is used in normal lighting conditions.

The images of the right optical imaging sensor (S101R) and left optical imaging sensor (S101L) of the frontside unit optical stereo image capture device (101) is synchronized, and a depth map is calculated by the frontside unit processor (105) in order to have information about any kind of obstacles in the UAV trajectory or flight path. In dark conditions, e.g. by night or in any other condition, the frontside unit thermal stereo image capture device (102) is used. The images of the right thermal imaging sensor (S102R) and left thermal imaging sensor (S102L) of the frontside unit thermal stereo image capture device (102) is synchronized, and a depth map is calculated by the frontside unit processor (105) to have information about any kind of obstacles in the UAV trajectory or flight path. The radar unit (103) data is continuously processed in parallel with the data of the frontside unit optical stereo image capture device (101) and the data of the thermal stereo image capture device (102). In such way, redundant (camera and radar) and reliable free space information is available to the UAV (1) with high confidence that enables autonomous flight even in unknown environments.

Using one of the frontside unit optical stereo image capture device (101) or the frontside unit thermal stereo image capture device (102), the UAV (1) is continuously calculating its own position, so it is localizing itself even in GPS/GNSS denied regions. The frontside unit optical stereo image capture device (101) visual data or the frontside unit thermal stereo image capture device (102) visual data are fed to the frontside unit processor (105) or to the UAV flight processor and processed by a visual simultaneous localization and mapping algorithm. In some cases, the visual data is available neither from the frontside unit optical stereo image capture device (101), nor from the frontside unit optical thermal stereo image capture device (102). Such a case for example when cameras see only the blue sky with no reference or feature points for a visual simultaneous localization and mapping algorithm. In such cases, the downward looking thermal image capture device 202 provides data for the algorithm for localization and mapping. Frontside unit inertial sensor device (104) and the inertial sensor device (204) provide data for enhancing the performance of the algorithm.

The phrase "at least one of" regarding a group of elements may be used herein to mean at least one element from the group consisting of the elements. For example, the phrase "at least one of" regarding a group of elements may be used herein to mean a selection of: one of the listed elements, a plurality of one of the listed elements, a plurality of individual listed elements, or a plurality of a multiple of listed elements.

The term "exemplary" may be used herein to mean "serving as an example, instance, or illustration". Any aspect or design described herein as "exemplary" is not necessarily to be construed as preferred or advantageous over other aspects or designs.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the examples and may take various forms and represent any information as understood in the art. Any type of information, as described herein, may be handled, for example, via one or more processors in a suitable way, e.g. as data. The terms "processor" or "controller" as, for example, used herein may be understood as any kind of entity that allows handling data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), System on Chip (SoC), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

## Claims

1. Autonomous unmanned aerial vehicle (1) comprising a main body (10), at least one arm (11), at least one flight actuator (12) attached to the arm (11), the at least one flight actuator is associated with a propeller (13) to provide aerial propulsion to the unmanned aerial vehicle, and a frontside unit (100) adjustably connected to the unmanned aerial vehicle's (1) front side through an axis "A", **characterized in that,** the frontside unit (100) contains at least two stereo image capture devices (101, 102) functioning on different working principles.

2. Autonomous unmanned aerial vehicle (1) according to claim 1, **characterized in that,** the frontside unit (100) contains an optical stereo image capture device (101) and a thermal stereo image capture device (102).

3. Autonomous unmanned aerial vehicle (1) according to claim 1, **characterized in that,** the frontside unit (100) is always facing in the direction of the unmanned aerial vehicle's (1) trajectory.

4. Autonomous unmanned aerial vehicle (1) according to claim 2, **characterized in that,** the localization of the UAV (1) is continuously calculated based on the data from the optical stereo image capture device (101) or based on the data of the thermal stereo image capture device (102).

5. Autonomous unmanned aerial vehicle (1) according to claim 4, **characterized in that,** the continuous calculation for the localization of the UAV (1) is based on a visual simultaneous localization and mapping algorithm.

6. Autonomous unmanned aerial vehicle (1) according to claim 2, **characterized in that,** the frontside unit (100) contains an optical stereo image capture device (101) and a thermal stereo image capture device (102), **wherein,** the optical stereo image capture device (101) contains a single left optical imaging sensor (S101L), and a single right optical imaging sensor (S101R), **and wherein,** the thermal stereo image capture device (102) contains a single left thermal imaging sensor (S102L), and a single right thermal imaging sensor (S101R), **characterized in that,** the single left optical imaging sensor (S101L), the single right optical imaging sensor (S101R), the single left thermal imaging sensor (S102L), and the single right thermal imaging sensor (S101R) are arranged on the same circuit board "B".

7. Autonomous unmanned aerial vehicle (1) according to claim 2, **characterized in that,** the frontside unit (100) contains an optical stereo image capture device (101) and a thermal stereo image capture device (102), **wherein,** the optical stereo image capture device (101) contains a single left optical imaging sensor (S101L), and a single right optical imaging sensor (S101R), **and wherein,** the thermal stereo image capture device (102) contains a single left thermal imaging sensor (S102L), and a single right thermal imaging sensor (S101R), **characterized in that,** the single left optical imaging sensor (S101L), the single right optical imaging sensor (S101R), the single left thermal imaging sensor (S102L), and the single right thermal imaging sensor (S101R) are arranged on separate printed circuit boards B101L, B101R, B102L and B102R, respectively.

8. Autonomous unmanned aerial vehicle (1) according to claim 2, **characterized in that,** the frontside unit (100) contains an optical stereo image capture device (101) and a thermal stereo image capture device (102), **wherein,** the optical stereo image capture device (101) contains a single left optical imaging sensor (S101L), and a single right optical imaging sensor (S101R), **and wherein,** the thermal stereo image capture device (102) contains a single left thermal imaging sensor (S102L), and a single right thermal imaging sensor (S101R), **characterized in that,** both the single left optical imaging sensor (S101L) and the single right optical imaging sensor (S101R) are arranged on a single printed circuit board B101, and both the single left thermal imaging sensor (S102L), and the single right thermal imaging sensor (S101R) are arranged on another printed circuit boards B102.
